# FASCICULE DE BREVET EUROPEEN

(11) **EP 0 557 225 B1**
(45) Date de publication et mention de la délivrance du brevet: **28.10.1998**
(21) Numéro de dépôt: 93440019.3
(22) Date de dépôt: 16.02.1993
(51) Int. Cl.: G01K 7/12

(54) **Dispositif de compensation de jonction froide pour thermocouple**
Kompensationsgerät für die kalte Verbindung eines Thermoelements
Thermocouple cold junction compensating device

(30) Priorité: 21.02.1992 FR 9202199
(43) Date de publication de la demande: 25.08.1993
(73) Titulaire: BRUKER SA, 67160 Wissembourg (FR)
(72) Inventeur: Krencker, Patrick, F-67800 Bischheim (FR); Weishaar, Jean-Luc, F-67250 Schoenenbourg (FR)
(74) Mandataire: Nuss, Pierre

(56) Documents cités:
- DE-A- 2 448 455
- DE-U- 8 708 316
- FR-A- 2 074 968
- REGELUNGSTECHNISCHE PRAXIS. vol. 18, no. 11, Novembre 1976, MÜNCHEN DE pages 318 - 319 UNKNOWN 'THERMOELEMENT-VERGLEICHSTELLEN-KOMPENSATOR; VERGLEICHSTELLEN-THERMOSTAT'

## Description

La présente invention concerne les techniques de mesure et de transmission du signal de mesure, plus particulièrement la mesure de températures au moyen d'un thermocouple, et a pour objet un dispositif de compensation de jonction froide pour thermocouple, destiné notamment à être mis en oeuvre dans l'enceinte d'un spectromètre de résonance magnétique nucléaire.

Actuellement, différents types de systèmes de mesure à thermocouple, associés généralement à des systèmes régulateurs de température, sont connus et mis en oeuvre dans des applications variées. Un tel systéme est décrit par DE-A-2 448 455.

Ainsi, la régulation de la température d'un échantillon placé dans un aimant de spectromètre de résonance magnétique nucléaire est réalisé par un régulateur électronique utilisant un thermocouple pour la mesure de la température à proximité immédiate de l'échantillon.

A la base de l'aimant du spectromètre, les fils du thermocouple, entourés d'une gaine de blindage, sont raccordés à un câble prolongateur, dit câble de compensation, pour acheminer le signal à l'entrée du régulateur, souvent distant de plusieurs mètres.

Comme un thermocouple est sensible à des différences de température, la jonction de référence, dite jonction froide, c'est-à-dire les points de rencontre entre les deux conducteurs des fils du thermocouple et les deux conducteurs en cuivre du circuit de mesure, doit être à une température connue pour faire une mesure de température.

Une façon de procéder consiste à plonger la jonction froide dans un bain de glace fondante. Ceci a pour avantage de donner une tension de sortie nulle pour 0°C, rendant l'usage de table pour thermocouple possible.

Une méthode plus pratique, connue sous le nom de "compensation électronique de soudure (ou de jonction) froide", consiste à additionner une tension de compensation au signal du thermocouple de manière à éviter l'usage d'une jonction de référence maintenue à une température constante (glace ou four).

Les systèmes régulateurs de température actuels sont munis généralement d'un dispositif de compensation de jonction froide intégré dans leur structure, qui permet d'atténuer les erreurs de mesure induites par des variations de température ambiante.

Néanmoins, cette compensation de jonction froide interne des systèmes régulateurs actuels est relativement imprécise. La précision maximale pouvant être atteinte étant au mieux de 5/100 de degré par degré de variation de température ambiante.

De plus, les jonctions entre les fils du thermocouple et les fils du câble de compensation sont également sensibles aux variations de température. En effet, la composition des deux fils du thermocouple, réalisés par exemple respectivement en cuivre et en constantan, n'est jamais rigoureusement identique à celle des deux fils du câble de compensation, entraînant ainsi la génération d'un signal électrique perturbateur venant s'additionner au signal utile fourni par le thermocouple de mesure.

On connaît également des boîtiers autonomes de compensation de jonction froide pour thermocouple.

Toutefois, la précision de la compensation réalisée par ces boîtiers connus n'est pas supérieure à celle indiquée précédemment, du fait, notamment, de l'influence directe des variations de température ambiante au niveau des connexions des fils du thermocouple sur ledit boîtier par l'intermédiaire de connecteurs.

Le problème posé à la présente invention consiste à réaliser un dispositif de compensation de jonction froide pour thermocouple pour lequel l'influence des variations de température ambiante sur le signal de mesure est fortement diminuée et préférentiellement inférieure à 5/1000 de degré par degré de variation de température ambiante, rendant le signal de mesure du thermocouple pratiquement insensible aux variations de température ambiante.

A cet effet, la présente invention a pour objet un dispositif de compensation de jonction froide pour thermocouple, décrit par les caractéristiques de la revendication 1.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue en coupe du boîtier d'interface conforme à l'invention et,
la figure 2 est un schéma de principe du dispositif de compensation de jonction froide et du dispositif de régulation thermique, disposés dans le boîtier d'interface représenté à la figure 1, selon un mode de réalisation préférentiel de l'invention.

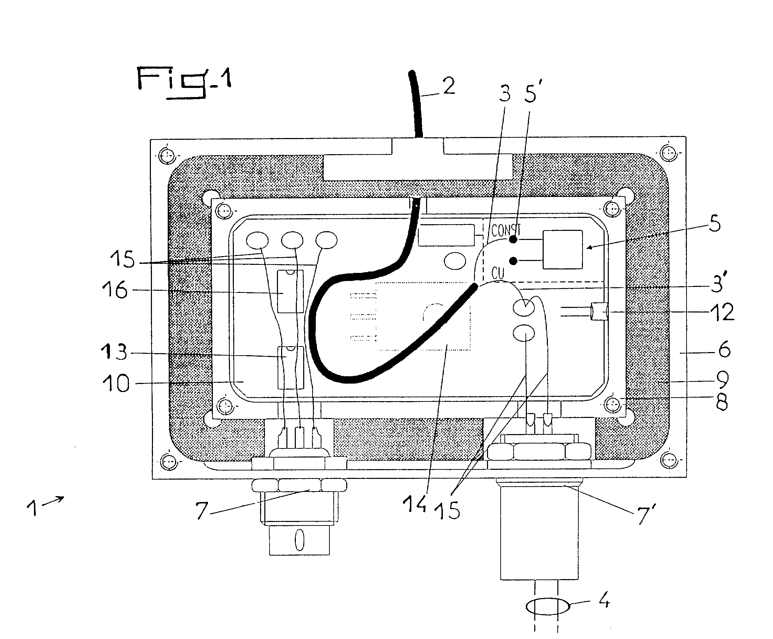

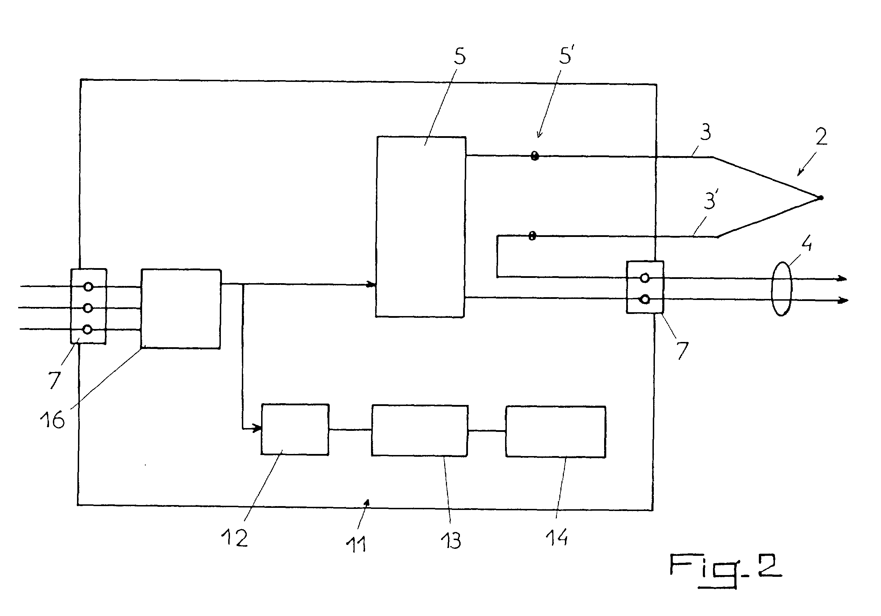

Conformément à l'invention, et comme le montrent les figures 1 et 2 des dessins annexés, le dispositif de compensation de jonction froide pour thermocouple est principalement constitué par un boîtier d'interface 1 thermostaté, recevant directement les fils 3, 3' du thermocouple 2 et assurant l'interconnexion de ces derniers avec un câble prolongateur 4, ledit boîtier d'interface 1 comportant, en outre, un circuit 5 de compensation de jonction froide.

Le maintien d'une température constante et uniforme à l'intérieur du boîtier d'interface 1, notamment dans l'espace environnant le point de contact 5', point générateur d'une tension d'erreur liée à ses variations de température, dont les variations maximales sont préférentiellement maintenues inférieures à 0,1°C, permet de réaliser, par voie électronique, une compensation de jonction froide très précise.

A cet effet et selon une première caractéristique de l'invention, le boîtier d'interface 1 est constitué, d'une part, par un boîtier externe 6, portant les connecteurs 7, 7' du câble d'alimentation et du câble prolongateur 4 et, d'autre part, par un boîtier interne 8 régulé en température, disposé dans ledit boîtier externe 6 avec interposition d'une couche 9 de matériau isolant et comportant un circuit imprimé 10 portant un dispositif 11 de régulation thermique et le circuit 5 de compensation de jonction froide.

De plus, afin de limiter au maximum les possibilités de génération de signaux d'erreurs dus à des connexions réalisées au moyen de connecteurs et à des chocs thermiques transmis par les fils 3 et 3' du thermocouple 2, ces derniers pénètrent, sur une certaine longueur, à l'intérieur du boîtier interne 8, les conducteurs desdits fils 3, 3' étant fixés directement sur le circuit imprimé 10.

Conformément à une autre caractéristique de l'invention, représentée à la figure 2 des dessins annexés, le dispositif 11 de régulation thermique est composé d'un capteur de température 12 associé à un cicuit 13 d'évaluation et de commande d'un moyen chauffant 14, ledit dispositif 11 étant réglé de manière à maintenir constante la température intérieure du boîtier interne 8 à une valeur donnée supérieure à la température ambiante.

Le capteur de température 12 précité, pouvant se présenter sous la forme d'une thermistance intégrée à une structure en pont, est avantageusement disposé à proximité immédiate du point de contact 5' consistant, pour le mode de réalisation représenté à la figure 2, en la liaison entre le fil 3 de constantan du thermocouple 2 et le circuit imprimé 10.

Comme le montre également la figure 2 des dessins annexés, le circuit 5 de compensation peut consister avantageusement en un générateur d'un signal d'erreur dépendant directement de la variation de la température du point de contact 5' (thermocouple 2 - circuit imprimé 10) et superposé au signal de mesure issu du thermocouple 2, ledit générateur étant réglé en fonction de la température intérieure du boîtier interne 8 thermostaté et en fonction du type de thermocouple 2.

Le circuit imprimé 10 porte, par ailleurs, comme représenté à la figure 2 des dessins annexés, un générateur 16 de tension constante, indépendante de la température, alimenté par l'intermédiaire du connecteur 7, ainsi qu'un dispositif d'ajustage du décalage de l'origine de mesure, permettant d'obtenir un signal de mesure, à la sortie du boîtier d'interface 1, référencé à 0°C.

Les constitutions des dispositifs électroniques décrits ci-dessus et illustrés à la figure 2 des dessins annexés, ainsi que le choix des composants adéquats, font partie des connaissances de l'homme du métier et sont susceptibles de se présenter selon différentes variantes de réalisation pratiques.

En vue de limiter aussi l'influence des chocs thermiques pouvant éventuellement être véhiculés par le câble d'alimentation ou le câble prolongateur 4, les connecteurs 7 et 7' respectifs, montés sur le boîtier externe 6, sont reliés aux bornes correspondantes du circuit imprimé 10 par l'intermédiaire de fils fins de liaison 15 de longueurs relativement importantes, évitant l'établissement de ponts thermiques entre l'intérieur du boîtier d'interface 1 et l'extérieur au niveau desdits connecteurs 7 et 7'.

Selon une autre caractéristique de l'invention, les conducteurs du câble prolongateur 4 sont réalisés en un matériau identique à celui constituant les fiches du connecteur 7' et les fils fins de liaison 15, préférentiellement du cuivre, minimisant les effets thermoélectriques au niveau de la liaison entre les fils du câble prolongateur 4 et les circuits d'entrée du régulateur de température.

Afin de permettre une mise en oeuvre du boîtier d'interface 1 à proximité immédiate ou dans l'enceinte même d'un spectromètre de résonance magnétique nucléaire, le boîtier externe 6 et, le cas échéant, le boîtier interne 8 sont réalisés en un matériau amagnétique, préférentiellement en aluminium ou en un alliage d'aluminium.

Le boîtier externe 6, constituant l'enveloppe support du boîtier d'interface 1, peut en outre comporter des moyens de fixation ou des éléments permettant la fixation sur la structure du spectromètre même. En effet, le boîtier d'interface 1 présentant une taille réduite et consécutivement un faible encombrement, peut être disposé sans difficulté en un emplacement quelconque sur ledit spectromètre, notamment sur la tête de mesure de ce dernier.

Grâce à l'invention, il est donc possible de réaliser un dispositif de compensation de jonction froide pour thermocouple 2, comportant un boîtier d'interface 1 de taille réduite et d'un seul tenant avec ledit thermocouple 2, les fils 3, 3' de ce dernier étant reliés directement aux circuits internes dudit boîtier d'interface 1.

Ce dernier permet, par les effets cumulatifs d'une thermostatisation du boîtier interne 8 et d'une compensation électronique précise des variations de température restantes du point de contact 5', d'assurer une mesure indépendante de la température ambiante, d'une précision supérieure à tous les dispositifs de mesure à thermocouple connus par la demanderesse.

Par ailleurs, le dispositif de compensation conforme à l'invention peut, bien entendu, être associé à tous les types de thermocouple connus, notamment par une adaptation conséquente des différents composants électroniques montés sur le circuit imprimé 10.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de compensation de jonction froide pour thermocouple, principalement constitué par un boîtier d'interface (1), recevant directement les fils (3, 3') du thermocouple (2) et assurant l'interconnexion de ces derniers avec un câble prolongateur (4), caractérisé en ce que ledit boîtier d'interface (1) comporte, en outre, un circuit (5) de compensation de jonction froide consistant en un générateur d'un signal d'erreur qui dépend directement de la variation de la température du point de contact (5') du thermocouple (2) avec un circuit imprimé (10) situé dans ledit boîtier d'interface (1) et qui est superposé au signal de mesure issu du thermocouple (2), ledit générateur étant réglé en fonction de la température intérieure d'un boîtier interne (8) thermostaté renfermant notamment ledit circuit imprimé (10) et en fonction du type de thermocouple (2).

2. Dispositif de compensation, selon la revendication 1, caractérisé en ce que le boîtier d'interface (1) est constitué, d'une part, par un boîtier externe (6), portant les connecteurs (7, 7') du câble d'alimentation et du câble prolongateur (4) et, d'autre part, par un boîtier interne (8) régulé en température, disposé dans ledit boîtier externe (6) avec interposition d'une couche (9) de matériau isolant et comportant un circuit imprimé (10) portant un dispositif (11) de régulation thermique et le circuit (5) de compensation de jonction froide.

3. Dispositif de compensation, selon la revendication 2, caractérisé en ce que les fils (3, 3') du thermocouple (2) pénètrent, sur une certaine longueur, à l'intérieur du boîtier interne (8), les conducteurs desdits fils (3, 3') étant fixés directement sur le circuit imprimé (10).

4. Dispositif de compensation, selon l'une quelconque des revendications 2 et 3, caractérisé en ce que le dispositif (11) de régulation thermique est composé d'un capteur de température (12) associé à un cicuit (13) d'évaluation et de commande d'un moyen chauffant (14), ledit dispositif (11) étant réglé de manière à maintenir constante la température intérieure du boîtier interne (8) à une valeur donnée supérieure à la température ambiante.

5. Dispositif de compensation, selon l'une quelconque des revendications 2 à 4, caractérisé en ce que les connecteurs (7 et 7') du câble d'alimentation et du câble prolongateur (4) sont reliés aux bornes correspondantes du circuit imprimé (10) par l'intermédiaire de fils fins de liaison (15) de longueurs relativement importantes.

6. Dispositif de compensation, selon la revendication 5, caractérisé en ce que les conducteurs du câble prolongateur (4) sont réalisés en un matériau identique à celui constituant les fiches du connecteur (7') et les fils fins de liaison (15), préférentiellement du cuivre.

7. Dispositif de compensation, selon l'une quelconque des revendications 2 à 6 caractérisé en ce que le boîtier externe (6) et, le cas échéant, le boîtier interne (8) sont réalisés en un matériau amagnétique, préférentiellement en aluminium ou en un alliage d'aluminium.

## Claims

1. A cold junction compensation device for a thermocouple which is principally formed by an interface casing (1) directly receiving the wires (3, 3') of the thermocouple (2) and providing for interconnection of the latter with an extension cable (4), characterised in that said interface casing (1) further comprises a cold junction compensation circuit (5) consisting of a generator for an error signal which depends directly on the variation in the temperature of the contact point (5')of the thermocouple (2) with a printed circuit (10) disposed in said interface casing (1) and which is superimposed on the measurement signal from the thermocouple (2), said generator being regulated in dependence on the interior temperature of an internal thermostatically controlled casing (8) containing in particular said printed circuit (10) and in dependence on the type of thermocouple (2).

2. A compensation device according to claim 1 characterised in that the interface casing (1) is formed on the one hand by an external casing (6) carrying the connectors (7, 7') of the supply cable and the extension cable (4) and on the other hand an internal casing (8) which is regulated in respect of temperature and which is disposed in said external casing (6) with the interposition of a layer (9) of insulating material and comprising a printed circuit (10) carrying a thermal regulation device (11) and the cold junction compensation circuit (5).

3. A compensation device according to claim 2 characterised in that the wires (3, 3') of the thermocouple (2) penetrate over a certain length in the interior of the internal casing (8), the conductors of said wires (3, 3') being fixed directly on to the printed circuit (10).

4. A compensation device according to either one of claims 2 and 3 characterised in that the thermal regulation device (11) is composed of a temperature sensor (12) associated with a circuit (13) for evaluation and control of a heating means (14), said device (11) being regulated in such a way as to keep the interior temperature of the internal casing (8) constant at a given value higher than the ambient temperature.

5. A compensation device according to any one of claims 2 to 4 characterised in that the connectors (7 and 7') of the supply cable and the extension cable (4) are connected to the corresponding terminals of the printed circuit (10) by way of fine connecting wires (15) of relatively substantial lengths.

6. A compensation device according to claim 5 characterised in that the conductors of the extension cable (4) are made of a material which is identical to that constituting the plugs of the connector (7') and the fine connecting wires (15), preferably copper.

7. A compensation device according to any one of claims 2 to 6 characterised in that the external casing (6) and if appropriate the internal casing (8) are made of a non-magnetic material, preferably aluminium or an aluminium alloy.

## Patentansprüche

1. Kompensationsvorrichtung für die kalte Verbindung eines Thermoelements, die im wesentlichen aus einem Schnittstellengehäuse (1) besteht, das direkt die Drähte (3, 3') des Thermoelements (2) aufnimmt und die Verbindung von letzteren mit einem Verlängerungskabel (4) gewährleistet, dadurch gekennzeichnet, daß das Schnittstellengehäuse (1) außerdem eine Schaltung (5) zur Kompensation der kalten Verbindung aufweist, die aus einem Generator für ein Fehlersignal besteht, das direkt abhängig ist von der Temperaturvariierung des Kontaktpunktes (5') des Thermoelements (2) mit einer gedruckten Schaltung (10), die in dem Schnittstellengehäuse (1) liegt, und dem von dem Thermoelement (2) abgegebenen Meßsignal überlagert ist, wobei der Generator in Abhängigkeit von der Innentemperatur eines thermostabilisierten Innengehäuses (8), das insbesondere die gedruckte Schaltung (10) enthält, und in Abhängigkeit von der Art des Thermoelements (2) gesteuert wird.

2. Kompensationsvorrichtung nach Anspruch 1, dadurch gekennzeichnet, daß das Schnittstellengehäuse (1) gebildet ist einerseits aus einem Außengehäuse (6), das die Verbinder (7, 7') des Zuführungskabels und des Verlängerungskabels (4) trägt, und andererseits durch ein temperaturreguliertes Innengehäuse (8), das in dem Außengehäuse (6) liegt, mit Zwischenfügen einer Schicht (9) aus isolierendem Material, und eine gedruckte Schaltung (10) aufweist, die eine Vorrichtung (11) zur thermischen Steuerung und die Schaltung (5) zur Kompensation der kalten Verbindung trägt.

3. Kompensationsvorrichtung nach Anspruch 2, dadurch gekennzeichnet, daß die Drähte (3, 3') des Thermoelements (2), auf einer bestimmten Länge, ins Innere des Innengehäuses (8) eintreten, wobei die Leiter der genannten Drähte (3, 3') direkt auf der gedruckten Schaltung (10) befestigt sind.

4. Kompensationsvorrichtung nach einem der Ansprüche 2 und 3, dadurch gekennzeichnet, daß die Vorrichtung (11) zur thermischen Steuerung zusammengesetzt ist aus einem Temperaturfühler (12), der mit einer Schaltung (13) zur Auswertung und Betätigung eines Heizmittels (14) verbunden ist, wobei die Vorrichtung (11) so gesteuert wird, daß die Innentemperatur des Innengehäuses (8) konstant auf einem gegebenen Wert gehalten wird, der höher ist als die Umgebungstemperatur.

5. Kompensationsvorrichtung nach einem der Ansprüche 2 bis 4, dadurch gekennzeichnet, daß die Verbinder (7 und 7') des Zuführungskabels und des Verlängerungskabels (4) mit den entsprechenden Klemmen der gedruckten Schaltung (10) mittels feiner Verbindungsdrähte (15) mit relativ großen Längen verbunden sind.

6. Kompensationsvorrichtung nach Anspruch 5, dadurch gekennzeichnet, daß die Leiter des Verlängerungskabels (4) aus einem Material, das identisch ist zu dem, das die Stecker des Verbinders (7') und die feinen Verbindungsdrähte (15) bildet, vorzugsweise aus Kupfer, bestehen.

7. Kompensationsvorrichtung nach einem der Ansprüche 2 bis 6, dadurch gekennzeichnet, daß das Außengehäuse (6) und, gegebenenfalls, das Innengehäuse (8) aus einem nichtmagnetischen Material, vorzugsweise aus Aluminium oder einer Aluminiumlegierung bestehen.
